# EUROPÄISCHE PATENTSCHRIFT

(11) **EP 0 954 490 B1**
(45) Veröffentlichungstag und Bekanntmachung des Hinweises auf die Patenterteilung: **06.11.2002**
(21) Anmeldenummer: 97937523.5
(22) Anmeldetag: 29.07.1997
(51) Int. Cl.: B65D 75/52, A46B 15/00, A46B 17/04

(54) **BORSTENWARE, INSBESONDERE ZAHNBÜRSTE, UND VERPACKUNG FÜR DIESE**
BRUSH, IN PARTICULAR TOOTHBRUSH, AND PACKAGE THEREFOR
BROSSE, NOTAMMENT BROSSE A DENTS, ET SON EMBALLAGE

(30) Priorität: 17.01.1997 DE 19701574
(43) Veröffentlichungstag der Anmeldung: 10.11.1999
(73) Patentinhaber: Interbros GmbH, 79674 Todtnau (DE)
(72) Erfinder: WEIHRAUCH, Georg, D-69483 Wald-Michelbach (DE)
(74) Vertreter: Lasch, Hartmut Dipl.-Ing.
(86) Internationale Anmeldenummer: EP9704118
(87) Internationale Veröffentlichungsnummer: WO98031605

(56) Entgegenhaltungen:
- EP-A- 0 088 672
- DE-A- 4 441 376
- FR-A- 2 323 354
- US-A- 4 863 026
- US-A- 5 618 289
- PATENT ABSTRACTS OF JAPAN vol. 096, no. 004, 30.April 1996 & JP 07 315433 A (SUNSTAR INC), 5.Dezember 1995,

## Beschreibung

Die Erfindung betrifft eine Verpackung für eine Borstenware, insbesondere eine Zahnbürste, die einen Borstenträger mit einer Vielzahl daran angebrachter Borsten aufweist, mit einer die Borstenware zumindest teilweise umgebenden Hülle, die zumindest abschnittsweise transparent ausgebildet ist, so daß die Borsten zumindest teilweise durch die Hülle hindurch sichtbar sind. Darüber hinaus betrifft die Erfindung eine entsprechende Borstenware und insbesondere eine Zahnbürste.

Die Eigenschaften einer Borstenware, insbesondere einer Bürste, sind wesentlich von der Art ihrer Borsten abhängig. Je nach dem, ob glatte, runde Borsten, Borsten mit oder ohne abrasiven Partikeln, spiralförmige Borsten oder Borsten mit einem speziellen, beispielsweise dreieckigen oder rechteckigen Querschnitt vorhanden sind, ergeben sich für die Bürsten grundsätzlich andere Einsatzbereiche, auf die die Bürste in der Regel speziell abgestimmt ist. Es ist deshalb für einen Benutzer sinnvoll und notwendig, eindeutig zu erkennen, welchen Borstentyp eine von ihm verwendete Bürste besitzt. Aufgrund der Feinheit der Borsten ist deren Ausgestaltung jedoch für den Benutzer mit bloßem Auge in der Regel nicht zu erkennen, so daß er auf die Angaben des Bürstenherstellers auf der Verpackung vertrauen muß. Bei Bürsten, die bereits in Benutzung sind, liegen entsprechende Informationen jedoch häufig nicht mehr vor.

Obwohl gleichartige Probleme bei einer Vielzahl unterschiedlicher Borstenwaren bzw. Bürsten, z. B. Polierbürsten, Textilbürsten, Schleifbürsten etc. auftreten, soll im folgenden beispielhaft von Zahnbürsten ausgegangen werden.

Bei Zahnbürsten muß sich für einen Benutzer eindeutig feststellen lassen, ob die verwendeten Borsten für die Reinigung seiner Zähne geeignet sind. So sollten Abrasivborsten, wie sie insbesondere zur Reinigung der Zähne von Rauchern verwendet werden, auf keinen Fall von Personen mit empfindlichen Zähnen benutzt werden, da es dann zu schmerzhaften Verletzungen kommen kann. Die bisher bei Zahnbürsten auf der Verpackung angebrachten verbalen und bildlichen Hinweise reichen nicht aus, weil sie einerseits vom Konsumenten nicht überprüfbar sind und andererseits mit der Verpackung verlorengehen. Auf diese Weise kann es mangels Unterscheidbarkeit insbesondere in aus mehreren Personen bestehenden Familien zu Verwechslungen von Zahnbürsten kommen, wodurch die Zähne gegebenenfalls unsachgemäß gereinigt oder gar geschädigt werden können.

Es ist bekannt, daß Borsten, insbesondere Zahnbürstenborsten, bei Gebrauch im Laufe der Zeit abnutzen. Die heutzutage üblicherweise verwendeten Borsten mit abgerundeten Endbereichen verlieren bei längerer Nutzungsdauer ihre abgerundete Form und erhalten ein undefiniert spitz zulaufendes Profil. Die hieraus resultierenden Verletzungen des Zahnfleisches können bei Bakterienbefall zu Entzündungen im Oralbereich führen. Der Benutzer hat bisher keine gebrauchstaugliche Möglichkeit, um verläßlich und detailliert zu erkennen, ob und in welchem Maß sich die Borsten seiner Zahnbürste abgenutzt haben. Dies ist im Hinblick auf eine wirksame Zahn- und Zahnfleischprophylaxe ein wesentlicher Nachteil.

Es ist zwar bekannt, die Borsten derart einzufärben, so daß sie bei längerer Nutzungsdauer ihre Färbung wieder verlieren und heller werden, doch ist dabei kein eindeutiger, klarer Farbübergang gegeben, so daß eine zuverlässige Erkennung des Abnutzungsgrades der Borsten nicht möglich ist.

Die EP-A-0 088 672 zeigt ein Etui zur Aufnahme eines Thermometers, eines Stiftes etc., wobei das Thermometer zwischen zwei Halbschalen eingeführt werden kann. Die obere Halbschale ist als Linse ausgebildet, wodurch für einen Betrachter eine vergrößerte Darstellung der im Thermometer befindlichen Temperaturskala sichtbar ist. Da die Linse fester Bestandteil des Etui ist, läßt sich das Thermometer jedoch nur aus einer vorgegebenen Richtung in vergrößerter Weise betrachten, wodurch das Etui zum allseitigen Betrachten beispielsweise der Borsten einer Zahnbürste nicht geeignet ist, da diese von allen Seiten betrachtet werden müssen, um ihren Abnutzungsgrad zuverlässig feststellen zu können. Gleichartige Probleme ergeben sich bei der in der DE-A-44 41 376 beschriebenen Vorrichtung zur Betrachtung von Münzen oder Briefmarken, bei der eine Münze oder Briefmarke unter einer transparenten Abdeckung angeordnet werden kann, in die eine lupenähnliche Einlage fest eingelagert ist.

Der Erfindung liegt die Aufgabe zugrunde, eine Borstenware, insbesondere eine Zahnbürste, und eine Verpackung für diese zu schaffen, die es ermöglichen, eine spezielle Ausgestaltung von Borsten und deren Abnutzungsgrad bei Gebrauch zuverlässig zu erkennen.

Diese Aufgabe wird hinsichtlich der Verpackung dadurch gelöst, daß der Verpackung eine Lupe zur vergrößerten Betrachtbarkeit der Borsten zugeordnet ist, wobei die Lupe als separates Bauteil ausgebildet und an der Verpackung abnehmbar gehalten ist. Mit Hilfe der abnehmbaren Lupe kann der Benutzer die Borsten von vielen verschiedenen Seiten in vergrößerter Darstellung betrachten, wodurch er klar und eindeutig den Borstentyp, z. B. Strukturborsten, Abrasivborsten, Applikationsborsten oder Flockborsten etc. erkennen kann. Darüberhinaus läßt sich durch die vergrößerte Betrachtung der Borsten auch während der gesamten Nutzungsdauer deren Abnutzungsgrad jederzeit in einfacher Weise feststellen, so daß die Bürste rechtzeitig ausgewechselt werden kann.

Üblicherweise besteht die Verpackung einer Zahnbürste aus einer Kunststoffhülle in Form eines transparenten Form- oder Folienteils, das einen die Borstenware oder Bürste aufnehmenden Produktraum begrenzt oder definiert. Alternativ kann auch eine andere Verpackung, z. B. ein Spritzgußteil oder eine Kartonverpackung mit zumindest einem transparenten Abschnitt vorgesehen sein. Bei allen derartigen Ausgestaltungen der Verpackung ist vorzugsweise vorgesehen, daß die Lupe in das transparente Kunststoff-Formteil bzw. den transparenten Abschnitt integriert ist, indem in dem Bereich des Produktraums, in dem die Borsten der eingelegten Bürste angeordnet sind, entweder auf der Innenseite des transparenten Verpackungsabschnitts oder auf dessen Außenseite in kraft-und/oder formschlüssiger Weise befestigt ist. Die Befestigung kann insbesondere durch eine Klemmung oder durch eine Rastung erfolgen.

Um die Lupe auch unabhängig von der Verpackung bei Gebrauch der Borstenware einsetzen zu können, ist vorgesehen, daß die Lupe von der Verpackung abnehmbar ist.

Häufig ist es für den Benutzer wünschenswert, die Borsten sowohl mit bloßem Auge in Originalgröße als auch durch die Lupe hindurch betrachten zu können. Dies kann dadurch erreicht werden, daß die Lupe schwenkbar an der Verpackung angebracht ist, so daß sie vom Benutzer wahlweise in eine die Borsten vergrößert wiedergebende Stellung oder eine den ungehinderten Blick auf die Borsten freigebende Stellung geschwenkt werden kann. Gleichartige Wirkungen lassen sich auch erzielen, wenn die Lupe nur im Bereich eines Teilabschnittes des Borstenbesatzes angeordnet ist. Auf diese Weise sieht der Betrachter die Borsten teilweise vergrößert, während er andere Borsten in Originalgröße sehen und vergleichen kann.

In allen genannten Fällen besteht die Lupe entweder aus Glas oder vorzugsweise aus einem transparenten Kunststoffmaterial, wobei sich insbesondere Polystyrole, Polycarbonate, Polymethacrylate, Polyurethane, Ionomere, Metallocen-Polymere, Polysulfone, Gießharze, bsp. Polyurethan-Giesharze, Celluloseacetate/-propionate/-acetobutyrate bewährt haben. Die Form der Lupe ist grundsätzlich beliebig und kann an den jeweiligen Einsatzzweck angepaßt sein.

Hinsichtlich der Borstenware, insbesondere der Zahnbürste, wird die oben genannte Aufgabe durch eine Lupe gelöst, die in lösbarer Weise an dem Borstenträger gelagert ist. Vor oder nach einer Benutzung der Zahnbürste kann der Benutzer die Lupe von dem Borstenträger abnehmen und die Borsten im Detail in vergrößerter Darstellung betrachten, wodurch er gute Aufschlüsse über den Abnutzungsgrad der Borsten gewinnt.

Eine Zahnbürste weist in der Regel einen Borstenträger in Form eines länglichen Stiels auf, der an seinem vorderen Abschnitt mit einer Beborstung versehen ist, während der verbleibende Abschnitt einen Handgriff bildet. In bevorzugter Ausgestaltung der Erfindung ist vorgesehen, daß die Lupe am hinteren Ende des Griffabschnittes vorzugsweise lösbar angebracht oder verrastet ist, so daß sie bei Gebrauch der Zahnbürste nicht stört und nicht abgenommen zu werden braucht. Dabei kann die Lupe auch schwenkbar am Borstenträger angebracht sein.

Weitere Einzelheiten und Merkmale der Erfindung sind aus der folgenden Beschreibung von Ausführungsbeispielen unter Bezugnahme auf die Zeichnung ersichtlich. Es zeigen:
- Figuren 1a, 1b: eine Zahnbürsten-Verpackung mit dort einsetzbarer Lupe,
- Figuren 2a, 2b und 2c: eine weitere Verpackungsausgestaltung in Aufsicht und Querschnitten und
- Figuren 3a, 3b, 3c, 3d, 3e: verschiedene Ausführungsformen einer separaten Lupe.

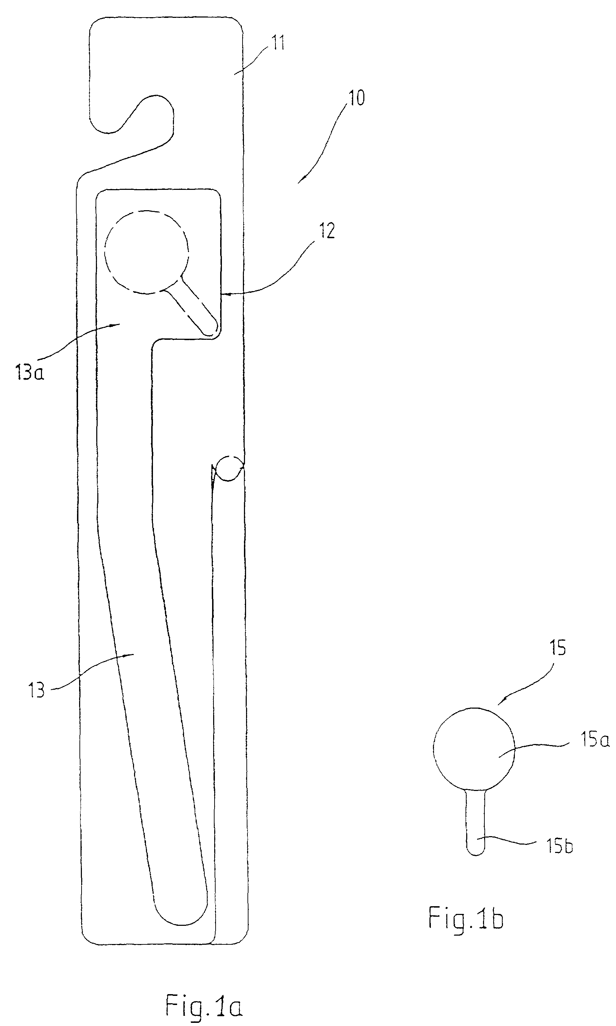

Gemäß dem in den Figuren 1a und 1b dargestellten Ausführungsbeispiel besitzt eine Verpackung 10 für eine Zahnbürste ein aus Kunststoff oder Pappe bestehendes ebenes Trägerteil 11, das unter Bildung eines die Zahnbürste aufnehmenden Produktraums 13 von einem transparenten Kunststoff-Formteil 12 überdeckt ist. In dem Bereich 13a des Produktraums 13, in dem bei eingesetzter Zahnbürste der Bürstenkopf mit dem Borstenbesatz angeordnet ist, ist eine Lupe 15 angebracht, mittels der die Borsten des nicht dargestellten Bürstenkopfes von der Außenseite der Verpackung 10 in vergrößerter Darstellung betrachtet werden können.

Dabei ist die Lupe 15 in Form der klassischen Darstellung einer Lupe mit einem kreisförmigen Vergrößerungsabschnitt 15a und einem angedeuteten Handgriff oder Stiel 15b ausgestaltet ist, wodurch dem Benutzer der Verpackung die Funktion dieses Abschnittes ohne weiteres klar wird. Aus Figur 1a ist ersichtlich, daß die Lupe 15 nur einen Teilbereich desjenigen Abschnittes 13a des Produktraumes 13 überdeckt, in dem der Kopf der Zahnbürste angeordnet wird. Somit kann der Benutzer einige Borsten durch die Lupe 15 hindurch in vergrößerter Darstellung betrachten, während andere Borsten in Originalgröße zu sehen sind.

Wie in den Figuren 1a und 1b dargestellt ist, ist die Lupe 15 als separates Bauteil ausgebildet (Figur 1b), das nachträglich innen- oder außenseitig des transparenten Kunststoff-Formteils 12 in kraft- und/oder formschlüssiger Weise festgelegt und insbesondere verklemmt oder verrastet wird. Somit dient die Lupe dem Benutzer sowohl beim Kauf der in der Verpackung 10 enthaltenen Zahnbürste zur Betrachtung und Identifizierung des Borstentyps und kann darüberhinaus mit der Zahnbürste aus der Verpackung entnommen werden und somit auch während der gesamten Nutzungsdauer zur Überwachung des Abnutzungsgrades der Borsten Verwendung finden.

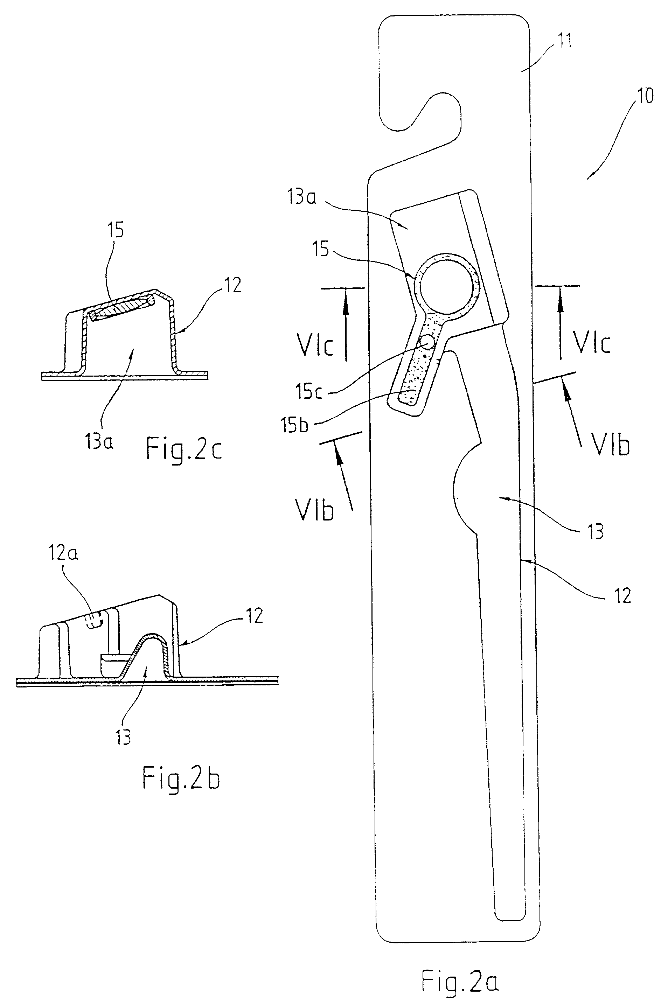

Die Figuren 2a, 2b und 2c zeigen eine Möglichkeit der lösbaren Fixierung einer als separates Bauteil ausgebildeten Lupe 15 auf der Innenseite des transparenten Kunststoff- Formteils 12. Wie der Figur 2b zu entnehmen ist, die den Schnitt VIb-VIb in Figur 2a. ohne die Lupe 15 zeigt, ist innenseitig des Kunststoff-Formteils 12 ein vorspringender Zapfen 12a angeformt, auf den der Stiel 15b der Lupe 15 mit einer Ausnehmung 15c aufgesteckt werden kann, wobei die Dimensionen so abgestimmt sind, daß sich eine Klemmwirkung ergibt. Dies hat zur Folge, daß die Lupe 15 in ihren auf den Zapfen 12a aufgesetzten Zustand direkt unterhalb des Kunststoff-Formteils 12 angeordnet ist, wie Figur 2c zu entnehmen ist, die den Schnitt VIc-VIc in Figur 2a zeigt.

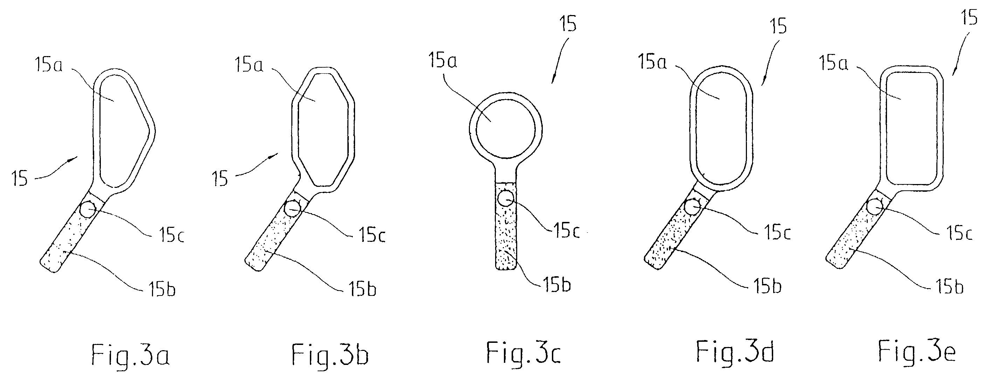

Die Figuren 3a bis 3e zeigen verschiedene Formgestaltungen einer Lupe, wie sie je nach Bürsten- und Borstentyp Verwendung finden kann. In allen Fällen ist eine Lupenfläche 15a vorgesehen, an der ein Griffteil 15b mit der vorgenannten Ausnehmung 15c angeformt ist. Wie die Figuren zeigen, kann das Lupenteil 15a wahlweise eine im wesentlichen dreieckförmige, eine sechseckförmige, eine kreisförmige, eine ovale oder eine rechteckige Form annehmen.

## Patentansprüche

1. Verpackung für eine Borstenware, insbesondere Zahnbürste, die einen Borstenträger mit einer Vielzahl daran angebrachter Borsten aufweist, mit einer die Borstenware zumindest teilweise umgebenden Hülle, die zumindest abschnittsweise transparent ausgebildet ist, so daß die Borsten zumindest teilweise durch die Hülle hindurch sichtbar sind, **dadurch gekennzeichnet, daß** der Verpackung (10) eine Lupe (15) zur vergrößerten Betrachtbarkeit der Borsten zugeordnet ist, wobei die Lupe (15) als separates Bauteil ausgebildet und an der Verpackung abnehmbar gehalten ist.

2. Verpackung nach Anspruch 1, **dadurch gekennzeichnet, daß** die Hülle ein transparentes Kunststoff-Formteil (12) oder -Folienteil aufweist, das einen die Borstenware aufnehmenden Produktraum (13) begrenzt, wobei die Lupe (15) in das Formteil (12) integriert ist.

3. Verpackung nach Anspruch 1 oder 2, **dadurch gekennzeichnet, daß** die Lupe (15) an der Verpackung verrastbar ist.

4. Verpackung nach einem der Ansprüche 1 bis 3, **dadurch gekennzeichnet, daß** die Lupe (15) schwenkbar an der Verpackung angebracht ist.

5. Borstenware, insbesondere Zahnbürste, mit einem Borstenträger, in dem eine Vielzahl von Borsten gehalten sind, **gekennzeichnet durch** eine Lupe, die in lösbarer Weise an dem Borstenträger gelagert und zum Betrachten der Borsten von diesem abnehmbar ist.

6. Borstenware nach Anspruch 5, **dadurch gekennzeichnet, daß** der Borstenträger ein länglicher Stiel mit einem vorderen beborsteten Abschnitt und einem hinteren Griffabschnitt ist, wobei die Lupe am hinteren Ende des Griffabschnittes angebracht ist.

7. Borstenware nach Anspruch 5 oder 6, **dadurch gekennzeichnet, daß** die Lupe schwenkbar an dem Borstenträger angebracht ist

## Claims

1. Packaging for brush-ware, particularly a toothbrush, which has a bristle carrier with a plurality of bristles attached thereto, with an envelope at least partly surrounding the brush-ware and which is at least sectionwise transparent, so that the bristles are at least partly visible through the envelope, **characterized in that** the packaging (10) has an associated magnifying glass (15) for magnified observation of the bristles, wherein the magnifying glass (15) is a separate component which is removable from the packaging (10).

2. Packaging according to claim 1, **characterized in that** the envelope has a transparent plastic molding (12) or film part, which defines a product space (13) receiving the brush-ware, the magnifying glass (15) being integrated into the molding (12).

3. Packaging according to claim 1 or 2, **characterized in that** the magnifying glass (15) can be locked to the pack.

4. Packaging according to one of the claims 1 to 3, **characterized in that** the magnifying glass (15) is pivotably attached to the pack.

5. Brush-ware, particularly toothbrush, with a bristle carrier, in which are held a plurality of bristles, **characterized by** a magnifying glass detachably mounted on the bristle carrier and which can be removed therefrom for observation of the bristles.

6. Brush-ware according to claim 5, **characterized in that** the bristle carrier is an elongated handle with a front, bristle-faced section and a rear handle section, the magnifying glass being attached to the rear end of the handle section.

7. Brush-ware according to claim 5 or 6, **characterized in that** the magnifying glass is pivotably fitted to the bristle carrier.

## Revendications

1. Emballage pour article de brosserie, en particulier pour une brosse à dents, présentant un support de poils sur lequel sont fixés une pluralité de poils, comportant une enveloppe tubulaire entourant au moins partiellement l'article de brosserie et dont certaines zones au moins sont transparentes de façon à ce que les poils soient au moins partiellement visibles à travers l'enveloppe tubulaire, **caractérisé en ce que** l'on associe à l'emballage (10) une loupe (15) pour une vision agrandie des poils, la loupe (15) étant conformée en pièce séparée et fixée détachable sur l'emballage.

2. Emballage selon la revendication 1, **caractérisé en ce que** l'enveloppe tubulaire présente une partie moulée (12) en matière plastique ou un film en matière plastique délimitant un espace-produit (13) recevant l'article de brosserie, la loupe (15) étant intégrée dans la partie moulée (12).

3. Emballage selon la revendication 1 ou 2, **caractérisé en ce que** la loupe (15) est encliquetable sur l'emballage.

4. Emballage selon l'une quelconque des revendications 1 à 3, **caractérisé en ce que** la loupe (15) est fixée pivotante sur l'emballage.

5. Article de brosserie, en particulier brosse à dents, comprenant un support de poils dans lequel sont maintenus une pluralité de poils, **caractérisé par** une loupe montée détachable sur le support de poils et pouvant être détachée de celui-ci pour l'observation des poils.

6. Article de brosserie selon la revendication 5, **caractérisé en ce que** le support de poils est un manche oblong comprenant une zone avant munie de poils et une zone arrière de préhension, la loupe étant montée à l'extrémité arrière de la zone de préhension.

7. Article de brosserie selon la revendication 5 ou 6, **caractérisé en ce que** la loupe est montée pivotante sur le support de poils.
